# EUROPEAN PATENT APPLICATION

(11) **EP 4 012 859 A1**
(43) Date of publication of application: **15.06.2022**
(21) Application number: 21208545.0
(22) Date of filing: 16.11.2021
(51) Int. Cl.: H02B 11/04, H01H 1/42, H01H 1/46, H01R 13/11, H01R 13/18, H01R 13/631

(54) **CONTACT FINGER ALIGNMENT ARRANGEMENT FOR A SWITCHGEAR CUBICLE**

(30) Priority: 10.12.2020 IN 202031053692
(71) Applicant: Schneider Electric Industries SAS, 92500 Rueil-Malmaison (FR)
(72) Inventor: AGRAWAL, Ashish, Rajasthan-32220 Gangapur City (IN)
(74) Representative: Swea IP Law AB

(57) **Abstract**

The present invention relates to a contact finger alignment arrangement (100) to facilitate electrical connections in a switchgear cubicle (102), said contact finger alignment arrangement (100) comprising a first contact finger (104-1) and a second contact finger (104-2) extending parallel to a longitudinal axis (106), each of said contact fingers (104-1,104-2) having a front end (108) defining a contact receiving portion to facilitate longitudinal insertion of a contact arm (114) fixed to said cubicle (102), a coupling portion (118) for mechanically coupling the first contact finger (104-1) and the second contact finger (104-2), and a rear end (112). The rear end (112) of each of said contact fingers (104-1,104-2) is provided with a conical hole (120) converging towards said longitudinal axis (106) for receiving an alignment pin (122) projected through the conical hole (120) of said first contact finger (104-1) to the second contact finger (104-2) such that the resilient rotational motion of the contact fingers (104-1,104-2) is executed in a restricted manner.

## Description

### Field of Invention:

The present invention in general relates to alignment of contact fingers in an electrical system. More specifically the invention relates to a contact finger alignment arrangement for a switchgear cubicle to facilitate electrical connections inside the electrical switchgear.

### Background of the invention:

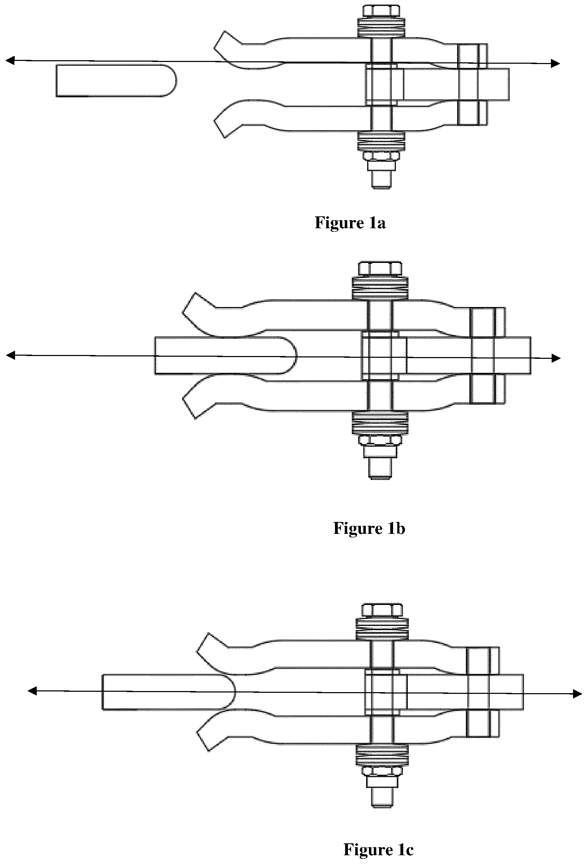

In MV switchgears the contact fingers are used to conduct and carry current between Cubicle fixed contact and circuit breaker contact arms. These contact arms are available in rectangular (Horizontal, Vertical) and round shapes. An exemplary embodiment of such contact finger arrangement is illustrated in figures 1(a) to 1(c).

In many cases where the contact arm is rectangular and the orientation is horizontal, the contact fingers must be aligned horizontally to get connected with a contact arm fixed to an electrical switchgear cubicle. In those cases, due to dimensional variation of cubicle contact arm and Circuit Breaker (CB) contact arms, a misalignment is created between them. Due to this issue the circuit breaker cannot be racked in inside the cubicle or the insertion torque will become very high.

Usually the contact fingers must take care of that misalignment to align themselves so that there is proper contact between conductors without stressing circuit breakers arms and body. This requirement needs the contact fingers to have flexibility to accommodate this variation but at the same time the contact fingers should not drop down due to gravity otherwise the circuit breaker will not be able to enter in the fixed contact due to direct collision of contact fingers.

This issue has been observed on existing products. In existing design of fingers, the flexibility is not available which generates severe stress lifting the circuit breaker.

With a view to the drawbacks in the existing arrangement of contact fingers in a switchgear cubicle, the inventors have proposed to solve this issue by introducing conical hole in contact finger without the need of tool change. With this proposed feature, one can increase flexibility in contact fingers to facilitate electrical contacts inside the cubicle. Along with this a flexible member is also introduced. This flexible member will keep the contact fingers centrally aligned as well as will not impact any existing performance.

### Summary of the invention:

Accordingly the present invention provides a contact finger alignment arrangement to facilitate electrical connections in a switchgear cubicle, said contact finger alignment arrangement comprising a first contact finger and a second contact finger coupled together and extending parallel to a longitudinal axis.

According one most preferred embodiment of the invention, each of the contact fingers includes
a front end defining a contact receiving portion to facilitate longitudinal insertion of a contact arm fixed to said cubicle,
a coupling portion for mechanically coupling the first contact finger and the second contact finger, wherein said mechanical coupling includes a flexible member attached in contact with each of said contact fingers such that the contact fingers execute a resilient rotational motion centering said coupling portion at a vertical plane along said longitudinal axis to adjust the opening of said contact receiving portion at the time of insertion of said contact arm fixed to said cubicle; and
a rear end mechanically connected with each other to align the first contact finger and the second contact finger, wherein the rear end of each of said contact fingers is provided with a conical hole converging towards said longitudinal axis for receiving an alignment pin projected through the conical hole of said first contact finger to the second contact finger such that the resilient rotational motion of the contact fingers centering said coupling portion at the vertical plane is executed in a restricted manner.

According to one preferred embodiment of the invention, the mechanical coupling includes attachment of said first contact finger with said second contact finger by a nut and bolt assembly.

According to one preferred embodiment of the invention, said nut and bolt assembly is adopted to connect with a contact arm of a Circuit Breaker (CB).

According to one preferred embodiment of the invention, the mechanical coupling includes a spring member disposed between said contact fingers and end points of said nut and bolt assembly providing additional flexibility to said contact arms.

According to one preferred embodiment of the invention, the flexible member is removably attached to said contact arm of the circuit breaker to facilitate the resilient rotational motion of the contact fingers.

According to one preferred embodiment of the invention, the flexible member is made of a metallic or an insulating flexible material such as Teflon and Nylon.

According to one preferred embodiment of the invention, the flexible material is a leaf spring or a coil spring where the coil spring is disposed along the body of the nut and screw assembly.

According to one preferred embodiment of the invention, said front end of said contact fingers has a chamfered profile to facilitate the longitudinal insertion of a contact arm fixed to said cubicle.

According to one preferred embodiment of the invention, the conical holes at the rear end are of identical dimension and disposed along a vertical axis.

The invented contact finger alignment arrangement keeps the insertion torque with-in limits while racking in circuit breaker inside cubicle. It also provides an easy interchangeability of circuit breakers between cubicles in a switchboard. Further eliminating the problem of circuit breaker not able to engage inside cubicle due to contact arm misalignment.

The invented arrangement can be easily assembled without impacting existing performances of the switch gear cubicle. Furthermore, the contact finger arrangement can be implemented by easy modification in existing contact finger without investing in new design of contact fingers.

### Brief description of the invention:

Embodiment of the invention will now be described with reference to the accompanying drawings. It will however be appreciated that the embodiment exemplified in the drawings are merely illustrative and not limitative to the scope of the invention, because it is quite possible, indeed often desirable, to introduce a number of variations in the embodiment that has been shown in the drawings.
Figures la, lb, lc illustrate the insertion and removal of an electrical connector fixed to a switchgear cubicle with a contact finger arrangement known in prior art.
Figure 2 depicts the conical hole feature in the contact finger alignment arrangement according to one embodiment of the invention.
Figure 3 illustrates the resilient rotational motion of the first contact finger restricted in a predetermined range by means of the conical hole and the alignment pin according to one embodiment of the invention.
Figure 4 depicts the contact finger alignment arrangement installed and operation inside an electrical switchgear.
Figure 5 depicts the line diagram of the first contact finger showing the conical hole feature according to the embodiment of the invention.
Figure 6 depicts the complete assembly of the contact finger alignment arrangement showing the alignment of the electrical contact of the switchgear cubicle according to one embodiment of the invention.
Figure 7 depicts the flexible member to resiliently rotate the contact fingers of the contact finger alignment arrangement according to one embodiment of the invention.
Figure 8 depicts the complete assembly of the contact finger alignment arrangement with a spring shaped flexible member.

### Detailed description of the invention:

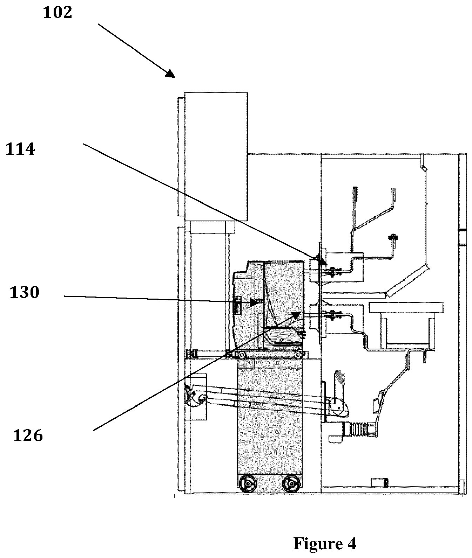

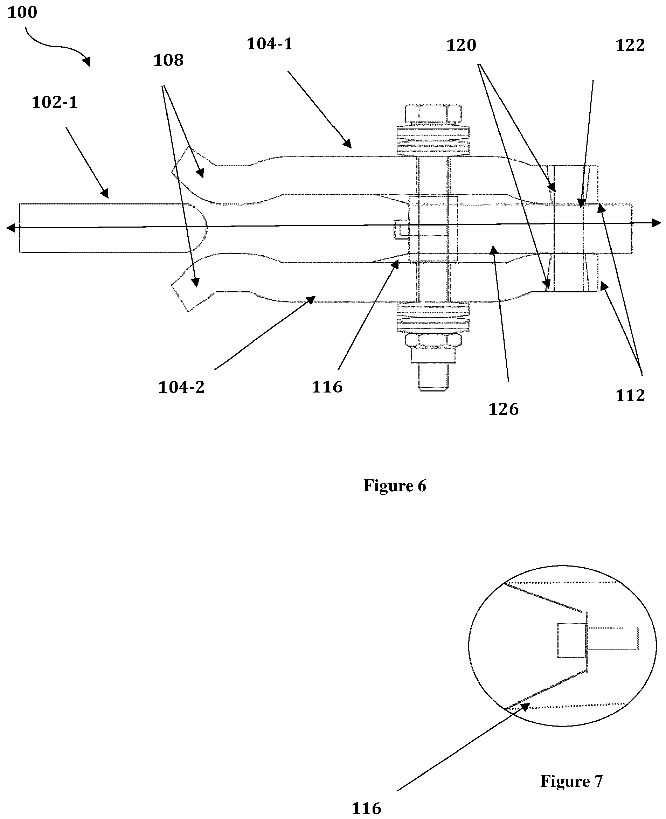

In figures 4 and 6 of the accompanying drawings, the invented contact finger alignment arrangement (100) is depicted and indicates its application in general to facilitate electrical contact arms (114) in a switchgear cubicle (102). The contact finger alignment arrangement (100) comprise a first contact finger (104-1) and a second contact finger (104-2) coupled together. The coupling in general is a mechanical coupling at a coupling portion (118) of the contact fingers (104-1,104-2) where a predetermined gap a provided between the front end (108) of the contact fingers (104-1,104-2). The contact fingers (104-1,104-2) extend parallel to a longitudinal axis (106) along which the electrical connection terminals are connected.

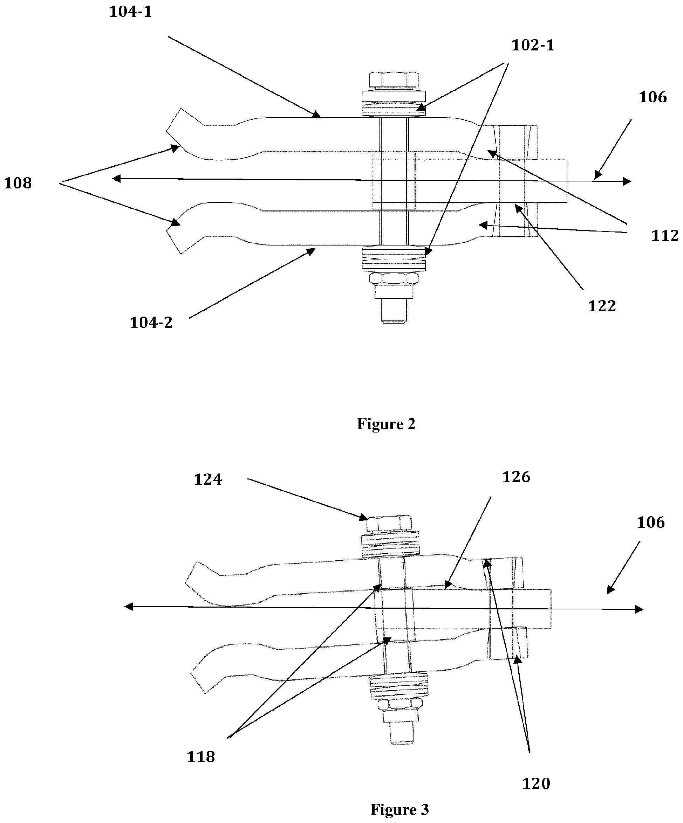

With reference to figures 2 and 3, each of said contact fingers (104-1,104-2) has a rear end (112) and front end (108). The front end (108) is defined in a way where the insertion of the electrical contact terminals takes place. As seen in the figures, the front end (108) of each of the contact fingers (104-1,104-2) has a chamfered profile which defines an opening for an electrical contact arm (114). The electrical contact arm (114) of the switchgear cubicle (102), which in general is fixed with the cubicle (102), inserted into the opening defined by said front end (108) of the contact fingers (104-1, 104-2).

The portion of each of said contact fingers (104-1,104-2), between the rear and the front end (108) defines a coupling portion (118) to mechanically couple the first contact finger (104-1) and the second contact finger (104-2). The means for the mechanical coupling includes at least one flexible member (116), at least two spring member (128) and one nut and bolt assembly (124) as depicted in figures 2 and 3 of the accompanying drawings. The body of said nut and bolt assembly (124) is projected from the first contact finger (104-1) towards the second contact finger (104-2) such that the head of the nut and bolt assembly (124) stay above the first contact finger (104-1). The body of the nut and bolt assembly (124) is adopted to connect with a contact arm (126) of a Circuit Breaker (CB) (130).

The flexible member (116) is attached with the contact arm (126) of circuit breaker (130) such that it remains in contact with each of said contact fingers (104-1,104-2). The flexible member (116) provides a restoring force to each of said contact fingers (104-1,104-2) for resiliently moving and keeping the position of the contact fingers (104-1,104-2) while insertion of the contact arm (114) fixed with the switchgear cubicle (102). The movement of the contact fingers (104-1,104-2) is typically a rotation motion along a vertical place, i.e. an upwards movement and a downward movement along a vertical axis (z-axis). Thus the contact fingers (104-1,104-2) execute a resilient rotational motion where the center for the rotation is the connection point of the nut and bolt assembly (124) and the contact finger.

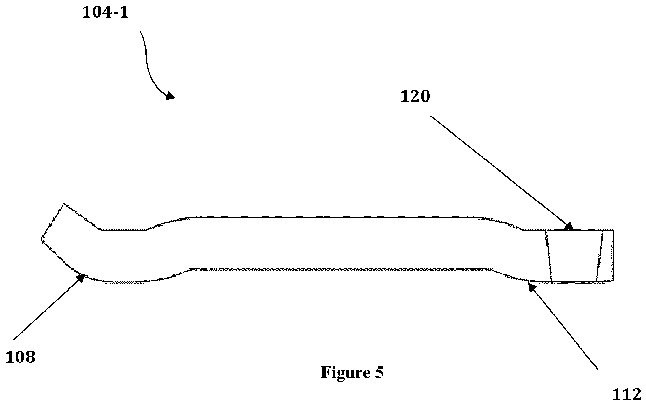

In the contact finger alignment arrangement (100), the magnitude of the upwards and downward movement of the contact fingers (104-1,104-2) are adjusted by said flexible member (116). The nut and bolt assembly (124) of the mechanical coupling keeps the rotational movement of the contact finger in a vertical plane along said longitudinal axis (106). At the time of insertion said contact arm (114) of the cubicle (102), a contact receiving portion is defined at the front end (108) of the contact fingers (104-1, 104-2) which facilitates the insertion as illustrates in the figure 6 of the accompanying drawings. According to one most preferred embodiment of the contact finger alignment arrangement (100), first contact finger (104-1) is depicted in the figure 5. The front end (108) of said contact fingers (104-1,104-2) has a chamfered profile to facilitate the longitudinal insertion of a contact arm (114) fixed to said cubicle (102). The conical hole (120) is also disposed at the rear end (112). The second contact finger (104-2) is the replica of the first contact finger (104-1) turn upside down.

With reference to figures 3, 5 and 6, the rear end (112) of both the contact fingers are mechanically connected with each other to align the first and the second contact finger (104-1,104-2). The rear end (112) of each of said contact fingers (104-1,104-2) is provided with a conical hole (120) each. The conical hole according to the most preferred embodiment converges towards said longitudinal axis (106). An alignment pin (122) is inserted through the conical hole (120) of the first contact finger (104-1) projecting towards the conical hole (120) of said second contact finger (104-2).

The alignment pin (122) establishes the mechanical coupling between the rear end (112) such that the resilient rotational motion of the contact fingers (104-1,104-2) centering said coupling portion (118) at the vertical plane is executed in a restricted manner. The conical hole (120) feature is designed in such a way that the contact fingers (104-1,104-2) will restrict the movement in X-Y plane, but it will allow movement in Z plane fulfilling performance as well as cubicle integration requirements.

In the contact finger alignment arrangement (100) due to this added flexibility in contact fingers (104-1,104-2), the fingers will have tendency to drop down due to gravity. To stop the fingers to drop down the flexible member (116) is introduced between the contact fingers (104-1,104-2). This feature keeps the contract figure aligned about the center i.e. the longitudinal axis (106) for smooth integration with cubicle (102). This part is designed in such a way that in normal condition this part will support the contact fingers (104-1,104-2) to keep them in center about said longitudinal axis (106).

And due to its flexible nature, it will allow contact fingers (104-1,104-2) to align themselves while engaging with cubicle contacts. Also, this part is designed in such a way that single part can be used for ratings up-to 2000A and arms with different thicknesses. In the applications where short circuit currents are high and movement of contact fingers (104-1,104-2) create chattering due to dynamic forces, in those cases this part can be made of flexible material such as Teflon and Nylon to not have impact on short circuit performances.

Figure 7 shows a close-up view of the flexible member (116). The wedges of the flexible member (116) is adapted to rest on the surface of the contact fingers (104-1,104-2) facing the longitudinal axis (106) so as to keep them aligned to in a horizontal level.

According to various application requirements, different widths of contact arms (114) are formed in the switchgear cubicle (102). Accordingly, the flexible member (116) is designed with maximum width of the contact fingers (104-1,104-2). Also, the number of contact finger sets can vary in numbers depending on the current rating. Due to this it is very important to keep the contact fingers (104-1,104-2) horizontal in all conditions and at same level for all contact finger sets while respecting the limited numbers of fixing available.

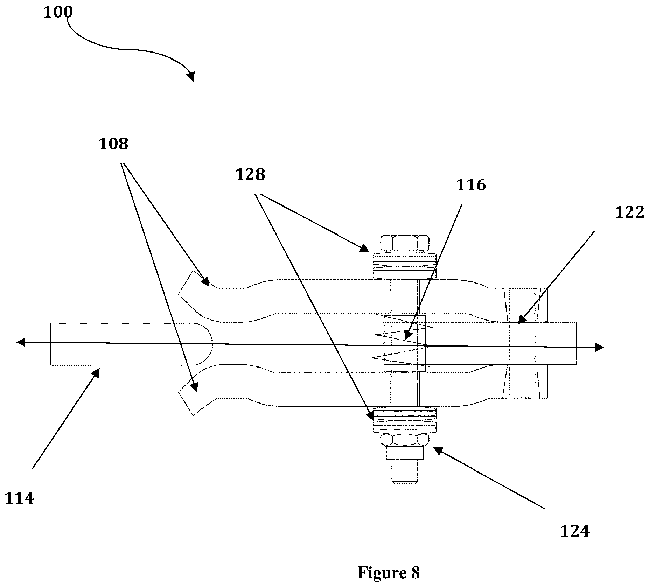

Instead of a flexible member, a metallic element can also be disposed on the nut and bolt assembly (124). Further, as depicted in the figure 8, the resiliency of the movement of the contact fingers (104-1,104-2) is accompanied by a flexible member (116) in the form of spring winded along the body of the nut and bolt assembly (124). Embodiment of a coil spring is shown in the accompanying drawings. However a leaf spring can also be used as the flexible member (116).

As seen in figures 3 and 7 the mechanical coupling includes at least two spring members (128). The spring members (128) are disposed around the head. The head of the screw and nut assembly rests on the spring member disposed between the head and the first contact finger (104-1). In a similar manner another identical spring member (128) is disposed between the nut and the second contact finger (104-2). Both of the spring members are disposed along the body of the screw and nut assembly. These spring members (128) provides required contact force to said contact fingers (104-1,104-2) of the contact figure alignment arrangement (100).

As already mentioned, the foregoing description is illustrative of the invention and not limitative to its scope, because it will be apparent to persons skilled in the art to devise other alternative embodiments without departing from the broad ambit of the disclosures made herein.

## Claims

1. A contact finger alignment arrangement (100) to facilitate electrical connections in a switchgear cubicle (102), said contact finger alignment arrangement (100) comprising a first contact finger (104-1) and a second contact finger (104-2) coupled together and extending parallel to a longitudinal axis (106), each of said contact fingers (104-1,104-2) comprising
a front end (108) defining a contact receiving portion to facilitate longitudinal insertion of a contact arm (114) fixed to said cubicle (102),
a coupling portion (118) for mechanically coupling the first contact finger (104-1) and the second contact finger (104-2), wherein said mechanical coupling includes a flexible member (116) attached in contact with each of said contact fingers (104-1,104-2) such that the contact fingers (104-1,104-2) execute a resilient rotational motion centering said coupling portion (118) at a vertical plane along said longitudinal axis (106) to adjust the opening of said contact receiving portion at the time of insertion of said contact arm (114) fixed to said cubicle (102); and
a rear end (112) mechanically connected with each other to align the first contact finger (104-1) and the second contact finger (104-2), wherein the rear end (112) of each of said contact fingers (104-1,104-2) is provided with a conical hole (120) converging towards said longitudinal axis (106) for receiving an alignment pin (122) projected through the conical hole (120) of said first contact finger (104-1) to the second contact finger (104-2) such that the resilient rotational motion of the contact fingers (104-1,104-2) centering said coupling portion (118) at the vertical plane is executed in a restricted manner.

2. The contact finger alignment arrangement (100) to facilitate electrical connections in a switchgear cubicle (102) as claimed in claim 1, wherein the mechanical coupling includes attachment of said first contact finger (104-1) with said second contact finger (104-2) by a nut and bolt assembly (124).

3. The contact finger alignment arrangement (100) to facilitate electrical connections in a switchgear cubicle (102) as claimed in claim 1, wherein said nut and bolt assembly (124) is adopted to connect with a contact arm (126) of a Circuit Breaker (CB) (130).

4. The contact finger alignment arrangement (100) to facilitate electrical connections in a switchgear cubicle (102) as claimed in claim 1, wherein the mechanical coupling includes spring members (128) disposed between said contact fingers (104-1,104-2) and end points of said nut and bolt assembly (124) providing additional flexibility to said contact fingers (104-1,104-2).

5. The contact finger alignment arrangement (100) to facilitate electrical connections in a switchgear cubicle (102) as claimed in claim 1, wherein the flexible member (116) is removably attached to said contact arm (126) of the circuit breaker (130) to facilitate the resilient rotational motion of the contact fingers (104-1,104-2).

6. The contact finger alignment arrangement (100) to facilitate electrical connections in a switchgear cubicle (102) as claimed in claim 1, wherein the flexible member (116) is made of metallic or insulating flexible material such as Teflon and Nylon.

7. The contact finger alignment arrangement (100) to facilitate electrical connections in a switchgear cubicle (102) as claimed in claim 1, wherein the flexible material is a leaf spring or a coil spring.

8. The contact finger alignment arrangement (100) to facilitate electrical connections in a switchgear cubicle (102) as claimed in claim 1, wherein said front end (108) of said contact fingers (104-1,104-2) has a chamfered profile to facilitate the longitudinal insertion of a contact arm (114) fixed to said cubicle (102).

9. The contact finger alignment arrangement (100) to facilitate electrical connections in a switchgear cubicle (102) as claimed in claim 1, wherein the conical holes (120) at the rear end (112) are of identical dimension and disposed along a vertical axis.
